# EUROPEAN PATENT APPLICATION

(11) **EP 4 454 799 A1**
(43) Date of publication of application: **30.10.2024**
(21) Application number: 22911876.5
(22) Date of filing: 20.12.2022
(51) Int. Cl.: B23K 9/16, B23K 9/18, B23K 11/00, B23K 35/30, B23K 101/04

(54) **AUSTENITIC WELDED STEEL TUBE HAVING WEAR RESISTANCE AND MANUFACTURING METHOD FOR SAME**

(30) Priority: 21.12.2021 KR 20210184250
(71) Applicant: POSCO Co., Ltd, Pohang-si, Gyeongsangbuk-do 37859 (KR)
(72) Inventor: LEE, Sang-Chul, Pohang-si, Gyeongsangbuk-do 37877 (KR)
(74) Representative: Meissner Bolte Partnerschaft mbB
(86) International application number: PCT/KR2022/020872
(87) International publication number: WO 2023/121243

(57) **Abstract**

According to aspects of the present invention, provided are a welded steel tube and a manufacturing method for same which can provide excellent wear resistance and also minimize hot cracking of the welded portion.

## Description

### Technical Field

The present disclosure relates to a welded steel tube and a manufacturing method for same, and more particularly, to a welded steel tube and a manufacturing method for the same, which may provide excellent wear resistance and also minimize hot cracks of the welded portion by optimizing a steel composition and a microstructure of a steel tube material, and a steel tube manufacturing process.

### Background Art

Components and structures used in wear-resistant environments require regular inspection and replacement to ensure work safety and work soundness. In order to inspect and replace components and structures, since an operation of the relevant industrial facility must be temporarily suspended, frequent inspection and replacement of components and structures lead to decreased productivity and economic efficiency. Accordingly, various attempts are being made to extend the lifespan of components and structures used in wear-resistant environments, and various studies are being actively conducted to improve the wear resistance of the materials themselves that make up the components and structures.

As the mining, oil and gas industries grow, wear and tear of welded steel tubes used in mining, transportation, refining, and storage processes is emerging as a major problem. Meanwhile, the development of oil sands has been in full swing recently, but it is known that welded steel tubes made of API-standard steel commonly used in the oil and gas industry do not secure a level of wear resistance that may transport a slurry including oil, rocks, gravel, sand and the like, for a long period of time, and thus, research on welded steel tubes with excellent wear resistance is urgently needed.

### Summary of Invention

### Technical Problem

An aspect of the present disclosure is to provide a welded steel tube and a manufacturing method for the same which may provide excellent wear resistance and also minimize hot cracking of the welded portion.

The object of the present invention is not limited to the above-described content. A person skilled in the art will have no difficulty in understanding the additional problems of the present invention from the overall contents of the present specification.

### Solution to Problem

According to an aspect of the present disclosure, a manufacturing method for an austenitic welded steel tube may include: forming an austenitic steel sheet into a tubular shape to form a butted portion; and providing a welded steel tube by welding the butted portion with a heat input of 4.3 kJ/mm or less.

The austenitic steel sheet may include, by wt%, C: 0.6 to 1.3%, Si: 0.1 to 1.0%, Mn: 11 to 28%, Cr: 5.0% or less (including 0%), P: 0.025% or less, S: 0.025% or less, and a balance of Fe and unavoidable impurities, stacking fault energy (SFE) defined by the following Relational Expression 1 may satisfy a range of 10 to 40 mJ/m², and a microstructure may include austenite in an amount of 80 area% or more. Stacking Fault Energy (SFE) = -24.9 + 0.814*[Mn] + 44.3*[C] - 0.62*[Si] + 1.06*[Cu] +7.9*[Al] - 0.555*[Cr]

In Relational Expression 1 above, [Mn], [C], [Si], [Cu], [Al], and [Cr] denote the contents (wt%) of Mn, C, Si, Cu, Al, and Cr included in the steel sheet, respectively, and when the component is not included, 0 is substituted.

A forming method of the austenitic steel sheet is any one selected from a spiral forming method, a UOE pressing method, a roll bending method, and a JCO forming method.

A welding method of the butted portion is one or more arc welding selected from shield metal arc welding (SMAW), gas metal arc welding (GMAW), gas tungsten arc welding (GTAW), flux cored arc welding (FCAW) and sub-merged arc welding (SAW), or is electric resistance welding (ERW).

An austenitic welded steel tube may include: a welded steel tube base material portion in which austenite is a base structure; and a welded portion connecting both ends of the welded steel tube base material portion to each other, wherein a maximum crack length of hot cracks formed in the welded portion is 0.5 mm or less.

The welded steel tube base material portion may include, by wt%, C: 0.6 to 1.3%, Si: 0.1 to 1.0%, Mn: 11 to 28%, Cr: 5.0% or less (including 0%), P: 0.025% or less, S: 0.025% or less, and a balance of Fe and unavoidable impurities, stacking fault energy (SFE) defined by the following Relational Expression 1 may satisfy a range of 10 to 40 mJ/m², and a microstructure may include austenite in an amount of 80 area% or more. Stacking Fault Energy (SFE) = -24.9 + 0.814*[Mn] + 44.3*[C] - 0.62*[Si] + 1.06*[Cu] +7.9*[Al] - 0.555*[Cr]

In Relational Expression 1 above, [Mn], [C], [Si], [Cu], [Al], and [Cr] denote the contents (wt%) of Mn, C, Si, Cu, Al, and Cr included in the welded steel tube base material portion, respectively, and when the component is not included, 0 is substituted.

During a wear resistance test specified in ASTM G65, a wear amount of the welded steel tube is 4g or less.

The solution to the problem does not enumerate all the features of the present invention, the various features of the present invention and the resulting advantages and effects may be understood in more detail by referring to the specific implementation examples and embodiments below.

### Advantageous Effects of Invention

According to an aspect of the present disclosure, provided are a welded steel tube and a manufacturing method for the same which may provide excellent wear resistance and also minimize hot cracks of the welded portion.

The effect of the present invention is not limited to the above-mentioned matters, and may be interpreted to include matters that may be reasonably inferred by a person skilled in the art from the matters described in this specification.

### Best Mode for Invention

The present invention relates to an austenitic welded steel tube having wear resistance and a manufacturing method for the same, and hereinafter, preferred embodiments of the present invention will be described. Embodiments of the present invention may be modified in various forms, and the scope of the present invention should not be construed as limited to the embodiments described below. These embodiments are provided to explain the present invention in more detail to those skilled in the art.

Hereinafter, an austenitic steel sheet used to manufacture a welded steel tube of the present invention will be described in more detail. Hereinafter, unless specifically stated otherwise, the percentages stated in relation to the content of the steel composition are based on weight, and the percentages stated in relation to the fraction of microstructure are based on area.

The austenitic steel sheet may include, by wt%, C: 0.6 to 1.3%, Si: 0.1 to 1.0%, Mn: 11 to 28%, Cr: 5.0% or less (including 0%), P: 0.025% or less, S: 0.025% or less, and a balance of Fe and unavoidable impurities.

### Carbon (C): 0.6-1.3%

Carbon (C) is a component effectively contributing to securing the strength and improving wear resistance of steel. Additionally, carbon (C) is a component improving the hardenability of steel and effectively contributing to the stabilization of austenite. In the present invention, in order to improve the strength of a weld joint and austenite stability as well as the base material of the welded steel tube, a content of carbon (C) included in an austenitic steel sheet may be limited to a range of 0.6% or more. The content of the carbon (C) may be, more preferably, 0.7% or more, and the content of carbon (C) may be, more preferably, 0.8% or more. On the other hand, when carbon (C) is excessively added, since a large amount of carbides may precipitate and reduce the wear resistance and elongation of the steel, the present invention may limit an upper limit of the content of the carbon (C) to 1.3%. The upper limit of the content of carbon (C) may be, preferably, 1.2%.

### Silicon (Si): 0.1 to 1.0%

Silicon (Si) not only acts as a deoxidizing agent, but is also a component effectively contributing to improving the strength of steel through solid solution strengthening. Accordingly, in order to achieve this effect, the austenitic steel sheet of the present invention may include 0.1% or more of silicon (Si). A lower limit of the content of silicon (Si) may be, preferably, 0.2%, and a lower limit of the content of the silicon (Si) may be, more preferably, 0.2%. However, since silicon (Si) is a component adversely affecting high and low temperature moldability, the present invention may limit an upper limit of the content of the silicon (Si) to 1.0%. The upper limit of the content of silicon (Si) may be, preferably, 0.9%, and the upper limit of the content of silicon (Si) may be, more preferably, 0.8%.

### Manganese (Mn): 11 to 28%

Manganese (Mn) is a component that effectively contributing to austenite stability and increases a work-hardening degree of steel while also effectively improving strength, impact toughness, and wear resistance. Additionally, manganese (Mn) is not only a component effectively contributing to maintaining non-magnetic steel after processing steel, but is also a component that enables effective desulfurization because sulfur (S) in the steel is coupled to form MnS. The austenitic steel sheet of the present invention may include 11% or more of manganese (Mn) to achieve this effect. A lower limit of the content of manganese (Mn) may be, preferably, 12%. On the other hand, when manganese (Mn) is added excessively, not only may the manufacturing costs inevitably increase, but there may also be a risk that the corrosion resistance of the steel may deteriorate. Accordingly, the present invention may limit the upper limit of the content of manganese (Mn) to 28%. An upper limit of the content of manganese (Mn) may be, preferably, 26%, and the upper limit of the content of manganese (Mn) may be, more preferably, 24%.

### Chromium (Cr): 5.0% or less (including 0%)

Chromium (Cr) is a ferrite stabilizing element and has the advantage of lowering the content of an austenite stabilizing element as chromium (Cr) is added. Additionally, chromium (Cr) acts as a key component in the generation of carbides such as MC or M₂₃C₆, and thus, when a certain amount of chromium (Cr) is added, a higher level of precipitation hardening may be achieved. Additionally, chromium (Cr) is a strong anti-oxidation component, and when a certain level of chromium (Cr) is added, the corrosion resistance of steel may be effectively improved. The austenitic steel sheet of the present invention may include chromium (Cr) to achieve this effect. A lower limit of the content of chromium (Cr) may be, preferably, 0.5%, and the lower limit of the content of chromium (Cr) may be, more preferably, 1.0%. On the other hand, when chromium (Cr) is added excessively, coarse grain boundary carbides may be formed, which may result in a decrease in wear resistance, and thus, in the austenitic steel sheet of the present invention, an upper limit of the content of chromium (Cr) may be limited to 5.0%. The upper limit of the content of chromium (Cr) may be, preferably, 4.5%, and the upper limit of the content of chromium (Cr) may be, more preferably, 4.0%.

### Phosphorus (P): 0.025% or less (including 0%)

Phosphorus (P) is an impurity inevitably introduced during a steel manufacturing process and is a component that is likely to cause secondary segregation, and thus, preferably, the addition amount thereof may be suppressed as much as possible. In theory, the content of phosphorus (P) may be, most preferably, 0%, but controlling the addition amount of phosphorus (P) to 0% may cause excessive process load, and thus, in the present invention, in consideration of an inevitably added content of phosphorus (P), an upper limit thereof is limited to 0.025%.

### Sulfur (S): 0.025% or less (including 0%)

Sulfur (S) is also an impurity inevitably introduced during the steel manufacturing process and is a component promoting hot cracks during welding, and thus, preferably, the addition amount thereof may be suppressed as much as possible. In theory, the content of sulfur (S) may be, most preferably, 0%, but controlling the addition amount of sulfur (S) to 0% may cause excessive process load, and thus, in the present invention, in consideration of an inevitably added content of sulfur (S), an upper limit thereof is limited to 0.025%.

The austenitic steel sheet according to an aspect of the present disclosure may include a balance of Fe and other unavoidable impurities in addition to the above-described components. However, during a normal manufacturing process, unintended impurities may inevitably be introduced from raw materials or the surrounding environments, which may not be completely excluded. Since these impurities are known to anyone skilled in the ordinary manufacturing process, all of them are not specifically mentioned in this specification. Additionally, an addition of additional effective components in addition to the above-mentioned components is not completely excluded.

In the austenitic steel sheet according to an aspect of the present invention, the stacking fault energy (SFE) defined by the following Relational Expression 1 may be limited to satisfy a range of 10 to 40 mJ/m². Stacking Fault Energy (SFE) = -24.9 + 0.814*[Mn] + 44.3*[C] - 0.62*[Si] + 1.06*[Cu] +7.9*[Al] - 0.555*[Cr]

In Relational Expression 1 above, [Mn], [C], [Si], [Cu], [Al], and [Cr] denote the contents (wt%) of Mn, C, Si, Cu, Al, and Cr included in the steel sheet, respectively, and when the component is not included, 0 is substituted.

When the stacking fault energy (SFE) is low, processability may be reduced due to low elongation, and as strain-induced martensite is formed, impact brittleness may decrease, and thus, the austenitic steel sheet according to an aspect of the present invention may limit the stacking fault energy (SFE) defined by Relational Expression 1 to a range of 10 mJ/m² or more. On the other hand, when the stacking fault energy (SFE) is excessively high, yield strength may decrease, and thus, the austenitic steel sheet according to an aspect of the present invention may limit the stacking fault energy (SFE) defined by Relational Expression 1 to a range of 40 mJ/m² or less.

The austenitic steel sheet according to an aspect of the present invention may include austenite as a matrix structure. The austenite fraction may be 80 area% or more, and may include 90 area% or more. Meanwhile, the present invention does not completely exclude the formation of other structures that are inevitably formed in addition to austenite, and other residual structures, including precipitates such as carbides, may be included in a range of 20 area% or less.

Hereinafter, a process for manufacturing an austenitic steel sheet of the present invention will be described in more detail.

A manufacturing method for an austenitic steel sheet according to an aspect of the present invention may include: heating a slab at a temperature range of 1000 to 1300°C, the slab including, wt%, C: 0.6 to 1.3%, Si: 0.1 to 1.0%, Mn: 11 to 28%, Cr: 5.0% or less (including 0%), P: 0.025% or less, S: 0.025% or less, and a balance of Fe and unavoidable impurities, and satisfying the following Relational Expression 1; providing a hot-rolled material by hot rolling the heated slab at a finish rolling temperature of 850 to 950°C; and providing a final material by cooling the hot-rolled material to a temperature range of 600°C or lower at a cooling rate of 10 to 100°C/s. Stacking Fault Energy (SFE) = -24.9 + 0.814*[Mn] + 44.3*[C] - 0.62*[Si] + 1.06*[Cu] + 7.9*[Al] - 0.555*[Cr]

In Relational Expression 1 above, [Mn], [C], [Si], [Cu], [Al], and [Cr] denote the contents (wt%) of Mn, C, Si, Cu, Al, and Cr included in the slab, respectively, and when the component is not included, 0 is substituted.

### Slab Heating

Since the slab provided in the manufacturing method of the present invention corresponds to a steel composition of the austenitic steel sheet described above, the description of the steel composition of the slab is replaced with the description of the steel composition of the austenitic steel sheet described above.

The slab provided as the above-described steel composition may be heated in a temperature range of 1000 to 1300°C. When the heating temperature is less than a certain range, problems may arise due to excessive rolling load during hot rolling, or a problem may arise in which alloy components are not sufficiently dissolved. A lower limit of a slab heating temperature may be limited to 1000°C. On the other hand, when the heating temperature is more than a certain range, the strength may decrease due to excessive growth of crystal grains, or hot rolling properties may be deteriorated by exceeding a solidus temperature of the steel, so that an upper limit of the slab heating temperature may be limited to 1300°C.

### Hot Rolling

A hot rolling process includes a rough rolling process and a finish rolling process, and the heated slab may be hot-rolled and provided as a hot-rolled material. In this case, a finishing hot rolling may be performed at a temperature range of, preferably, 850 to 950°C. When the finishing hot rolling temperature is excessively low, there may be concern about excessive rolling load, so that the finishing hot rolling temperature may be limited to a range of 850°C or higher. Additionally, when the finishing hot rolling temperature is excessively high, there may be concern about a decrease in the strength of the steel sheet, so that the finishing hot rolling temperature may be limited to a range of 950°C or lower. A thickness of the hot-rolled material that has been hot-rolled is not particularly limited, but as a non-limiting example, the thickness of the hot-rolled material may satisfy the range of 6 to 30 mm.

### Cooling

A hot-rolled hot material may be cooled to a cooling stop temperature of 600°C or less at a cooling rate of 10~100°C/s. When the cooling rate is below a certain range, the ductility of the steel may decrease and the wear resistance may deteriorate due to carbides precipitated at the grain boundaries during cooling, so that the cooling rate of the hot-rolled material may be limited to a range of 10°C/s or more. However, as the cooling rate is faster, this may be advantageous for the effect of suppressing carbide precipitation, but it may be difficult to achieve a cooling rate exceeding 100°C/s in normal cooling due to the characteristics of the equipment, so that an upper limit of the cooling rate may be limited to 100°C/s. A cooling method is not particularly limited, but accelerated cooling may be preferably applied.

The austenitic steel sheet manufactured by the above-described manufacturing method may include 80 area or more of austenite as a matrix structure. A fraction of austenite may be 90 area% or more.

Hereinafter, a manufacturing method for an austenitic welded steel tube according to an aspect of the present invention will be described in more detail.

A manufacturing method for an austenitic welded steel tube according to an aspect of the present invention includes: forming an austenitic steel sheet into a tubular shape to form a butted portion; and providing a welded steel tube by welding the butted portion with a heat input of 4.3 kJ/mm or less.

### Forming Stage

After preparing an austenitic steel sheet described above, a welded steel tube may be formed into a tubular shape. In the present invention, a method of forming an austenitic steel sheet into a tubular shape is not particularly limited. Forming methods commonly applied when manufacturing welded steel tubes may be applied. Any one forming method selected from a spiral forming method, a UOE press method, a roll bending method, and a JCO forming method may be applied.

Additionally, before molding the austenitic steel sheet into a tubular shape, an operation of improving and processing both ends forming a butted portion may be additionally included.

### Welding Stage

A welded steel tube may be provided by forming an austenitic steel sheet into a tubular shape and then welding the butted portion. A welding method applied in the present invention is not particularly limited, and any welding method commonly applied when manufacturing welded steel tubes may be applied without limitation. Arc welding selected from one or more of shield metal arc welding (SMAW), gas metal arc welding (GMAW), gas tungsten arc welding (GTAW), flux cored arc welding (FCAW), and sub-merged arc welding (SAW), or electrical resistance welding (ERW), may be applied, which may be interpreted to include cases in which one or more of these are selectively combined and applied to welding.

The inventor of the present invention has derived the present invention by confirming that in a case of performing welding using a steel sheet satisfying a composition system limited by the present invention, the welding heat input applied during welding is a factor that has a major influence on whether hot cracks occur in a welded portion. That is, since the manufacturing method for the welded steel tube according to an aspect of the present invention controls the amount of welding heat input applied during welding of an austenitic steel sheet to a range of 4.3 kJ/mm or less, hot cracks occurring in welding lines may be effectively suppressed. A welding heat input may be, preferably, 4.2kJ/mm or less, and a welding heat input may be, more preferably, 4.1kJ/mm or less.

Hereinafter, the austenitic welded steel tube according to an aspect of the present invention will be described in more detail.

The austenitic welded steel tube according to an aspect of the present invention includes: a welded steel tube base material portion in which austenite is a base structure; and a welded portion connecting both ends of the welded steel tube base material portion to each other. A maximum crack length of the hot crack formed in the welded portion is 0.5 mm or less, and during the wear resistance test specified in ASTM G65, the wear amount of the welded steel tube may be 4g or less.

Since the welded steel tube base material portion of the present invention has a steel composition and a microstructure corresponding to the austenitic steel sheet described above, when performing a wear resistance test specified in ASTM G65 on a welded steel tube according to an aspect of the present invention, the wear amount may be 4g or less, and the wear amount may be, preferably, 2g or less.

Since the welded portion of the present invention is formed by applying a welding heat input of 4.3kJ/mm or less, an occurrence of hot cracks in the welded portion may be suppressed maximally. In other words, the formation of hot cracks on a melting line may maximally suppressed, even if hot cracks occur, a maximum crack length of hot cracks may be suppressed to a level of 0.5 mm or less.

Accordingly, the austenitic welded steel tube according to an aspect of the present invention not only has excellent wear resistance, but also minimizes the formation of hot cracks in the welded portion, even when applied in harsh wear-resistant environments, a lifespan thereof may be effectively maximized.

Hereinafter, the austenitic welded steel tube and a manufacturing method therefor according to an aspect of the present invention will be described in more detail through specific embodiments. It should be noted that the embodiments below are only for understanding of the present invention and are not intended to specify the scope of the present invention. The scope of rights of the present invention is determined by matters stated in the patent claims and matters reasonably inferred therefrom.

### Mode for Invention

### (Embodiment 1)

After preparing a slab having alloy components listed in Table 1 below, each specimen was prepared by applying the above-described process conditions.

**[Table 1]**

| Steel Type | Alloy Component (wt%) | | | | | | |
|---|---|---|---|---|---|---|---|
| | C | Si | Mn | Cr | P | S | Relational Expression1 |
| Inventive Steel 1 | 1.0 | 0.2 | 18 | 3 | 0.001 | 0.0007 | 33 |
| Inventive Steel 2 | 0.8 | 0.2 | 16 | 1 | 0.001 | 0.0007 | 23 |
| Inventive Steel 3 | 0.6 | 0.5 | 24 | 2 | 0.001 | 0.0007 | 28 |
| Comparative Steel 1 | 0.6 | 0.2 | 1.5 | 1 | 0.001 | 0.0007 | 2.2 |

After cutting each specimen, a mirror surface was manufactured, and after corroding the mirror surface using 2vol% Nital etching solution, the microstructure was observed using an optical microscope and a scanning electron microscope, and the austenite fraction of each specimen is listed in Table 2. Additionally, after conducting an abrasion test for each test according to ASTM G65, the wear amount was measured to evaluate abrasion resistance, and the results are listed in Table 2.

**Table 2:**

| Specimen No. | Steel Type | Austenite fraction (Area%) | Wear Amount of ASTM G65 (g) |
|---|---|---|---|
| 1 | Inventive Steel 1 | 90 | 0.5 |
| 2 | Inventive Steel 2 | 91 | 0.5 |
| 3 | Inventive Steel 3 | 98 | 0.9 |
| 4 | Comparative Steel 1 | 5 | 2.9 |

According to Table 1 and Table 2, it may be seen that Inventive steels 1 to 3, which satisfy the alloy composition and microstructure limited by the present invention, had excellent wear resistance properties, but Comparative Steel 1, which does not satisfy the alloy composition and microstructure limited by the present invention, had relatively poor wear resistance properties.

### (Embodiment 2)

After welding the specimen of Inventive Steel 1 under the following welding conditions, an occurrence of hot cracks in the welded portion was evaluated using an optical microscope.

In a case of condition 1 in which sub-merged arc welding (SAW) welding was performed using 790A*38V with a heat input of 4.4kJ/mm, hot cracks with a maximum crack length exceeding 0.5 mm were confirmed in the welded portion. On the other hand, in condition 2 in which sub-merged arc welding (SAW) welding was performed with a heat input of 3.5kJ/mm using 650A*35V, no hot cracks with a maximum crack length exceeding 0.5 mm were identified in the welded portion, and thus, it may be seen that an occurrence of cracks in the welded portion is effectively suppressed in the austenitic welded steel tube according to an aspect of the present invention.

Although the present invention has been described in detail through embodiments above, other forms of embodiments are also possible. Therefore, the technical spirit and scope of the claims set forth below are not limited to the embodiments.

## Claims

1. A manufacturing method for an austenitic welded steel tube, the method comprising:
forming an austenitic steel sheet into a tubular shape to form a butted portion; and
providing a welded steel tube by welding the butted portion with a heat input of 4.3 kJ/mm or less.

2. The manufacturing method for an austenitic welded steel tube of claim 1, wherein the austenitic steel sheet comprises, by wt%, C: 0.6 to 1.3%, Si: 0.1 to 1.0%, Mn: 11 to 28%, Cr: 5.0% or less (including 0%), P: 0.025% or less, S: 0.025% or less, and a balance of Fe and unavoidable impurities,
stacking fault energy (SFE) defined by the following Relational Expression 1 satisfies a range of 10 to 40 mJ/m², and
a microstructure includes austenite in an amount of 80 area% or more, Stacking Fault Energy (SFE) = -24.9 + 0.814*[Mn] + 44.3*[C] - 0.62*[Si] + 1.06*[Cu] +7.9*[Al] - 0.555*[Cr]
where [Mn], [C], [Si], [Cu], [Al], and [Cr] denote the contents (wt%) of Mn, C, Si, Cu, Al, and Cr included in the steel sheet, respectively, and when the component is not included, 0 is substituted.

3. The manufacturing method for an austenitic welded steel tube of claim 1, wherein a forming method of the austenitic steel sheet is any one selected from a spiral forming method, a UOE pressing method, a roll bending method, and a JCO forming method.

4. The manufacturing method for an austenitic welded steel tube of claim 1, wherein a welding method of the butted portion is one or more arc welding selected from shield metal arc welding (SMAW), gas metal arc welding (GMAW), gas tungsten arc welding (GTAW), flux cored arc welding (FCAW) and sub-merged arc welding (SAW), or is electric resistance welding (ERW).

5. An austenitic welded steel tube, comprising:
a welded steel tube base material portion in which austenite is a base structure; and
a welded portion connecting both ends of the welded steel tube base material portion to each other,
wherein a maximum crack length of hot cracks formed in the welded portion is 0.5 mm or less.

6. The austenitic welded steel tube of claim 5, wherein the welded steel tube base material portion comprises, by wt%, C: 0.6 to 1.3%, Si: 0.1 to 1.0%, Mn: 11 to 28%, Cr: 5.0% or less (including 0%), P: 0.025% or less, S: 0.025% or less, and a balance of Fe and unavoidable impurities,
stacking fault energy (SFE) defined by the following Relational Expression 1 satisfies a range of 10 to 40 mJ/m², and
a microstructure includes austenite in an amount of 80 area% or more, Stacking Fault Energy (SFE) = -24.9 + 0.814*[Mn] + 44.3*[C] - 0.62*[Si] + 1.06*[Cu] +7.9*[Al] - 0.555*[Cr]
where [Mn], [C], [Si], [Cu], [Al], and [Cr] denote the contents (wt%) of Mn, C, Si, Cu, Al, and Cr included in the welded steel tube base material portion, respectively, and when the component is not included, 0 is substituted.

7. The austenitic welded steel tube of claim 5, wherein during a wear resistance test specified in ASTM G65, a wear amount of the welded steel tube is 4g or less.
